# EUROPÄISCHE PATENTSCHRIFT

(11) **EP 2 869 145 B1**
(45) Veröffentlichungstag und Bekanntmachung des Hinweises auf die Patenterteilung: **27.04.2016**
(21) Anmeldenummer: 13190584.6
(22) Anmeldetag: 29.10.2013
(51) Int. Cl.: G05B 19/05, G05B 19/042

(54) **Verfahren zur Beeinflussung eines Steuerprogramms eines Steuergerätes**
Method for influencing a control program of a control unit
Procédé destiné à influencer un programme de commande d'un appareil de commande

(43) Veröffentlichungstag der Anmeldung: 06.05.2015
(73) Patentinhaber: dSPACE digital signal processing and control engineering GmbH, 33102 Paderborn (DE)
(72) Erfinder: Rolfsmeier, André, 33175 Bad Lippspringe (DE); Hufnagel, Thorsten, 33154 Salzkotten (DE)

(56) Entgegenhaltungen:
- DE-A1- 10 335 989
- DE-A1-102004 027 033

## Beschreibung

Die Erfindung betrifft ein Verfahren zur Beeinflussung eines Steuerprogramms eines Steuergerätes gemäß dem Oberbegriff des Patentanspruchs 1.

Steuergeräte werden in großer Zahl in vielen Bereichen der Technik eingesetzt. Ein besonders wichtiger Anwendungsbereich ist unter anderem die Motor-, Getriebe- und Fahrwerksteuerung bei den Automobilen und die Steuerung von Triebwerken bei Flugzeugen. Bei derartigen Steuergeräten ist im Allgemeinen der Programmkode in binärer Form abgelegt. Eine Änderung des jeweiligen vorzugsweise in einem Festwertspeicher abgelegten Steuerprogramms ist nicht ohne weiteres möglich.

Ein Verfahren zur Beeinflussung eines Steuergerätes ist aus der Druckschrift DE 10 2004 027 033 A1 bekannt.

Vor diesem Hintergrund besteht die Aufgabe der Erfindung darin, ein Verfahren zur Beeinflussung eines Steuerprogramms eines Steuergerätes anzugeben, das den Stand der Technik weiterbildet.

Die Aufgabe wird durch ein Verfahren zur Beeinflussung eines Steuerprogramms eines Steuergerätes mit den Merkmalen des Patentanspruchs 1 und gelöst. Vorteilhafte Ausgestaltungen der Erfindung sind Gegenstand von Unteransprüchen.

Gemäß dem ersten Gegenstand der Erfindung wird ein Verfahren zur Beeinflussung eines Steuerprogramms eines Steuergerätes bereitgestellt, wobei das Steuerprogramm eine Vielzahl von ersten Funktionen und wenigstens eine der ersten Funktionen für die Steuerung eines Aktuators ausgebildet ist, und ein Speicher vorgesehen ist und der Speicher mit den ersten Funktionen zugeordneten Unterprogrammen belegte Speicherbereiche aufweist, und das Steuerprogramm als ein binärer Programmkode vorliegt, wobei in dem Programmkode des Steuerprogramms bei dem Aufruf von einer der ersten Funktionen eine Sprungadresse vorliegt und die Sprungadresse auf eine Speicheradresse des mit dem Funktionsaufruf verbundenen Unterprogramms zeigt und wobei das Unterprogramm als eine Abfolge von binärem Programmkode vorliegt und an dem Ende der Abfolge des Programmkodes des Unterprogramms ein Rücksprungbefehl vorliegt und wobei der Programmkode des Steuerprogramms auf das Auftreten von Funktionsaufrufen untersucht wird und die mit den Funktionsaufrufen verbundenen Sprungadressen und Adressen der Rücksprungbefehle ermittelt werden und aus der Ermittlung die Größe der mit den jeweiligen Unterprogrammen belegten Speicherbereiche ermittelt werden und die den ersten Funktionen zugeordneten Bezeichner mit den, den jeweiligen ersten Funktionen zugeordneten Größen und Adressen der Speicherbereiche in einer Anzeigeeinheit dargestellt werden, wobei die Anzeigeeinheit als Teil eines Computersystem ausgebildet ist und mittels des Computersystems wenigstens eine der ersten Funktionen als zu löschend ausgewählt wird und die Größe und Adresse der ausgewählten ersten Funktion in einer Informationsstruktur gespeichert wird und wenigstens ein Funktionsaufruf der ausgewählten ersten Funktion deaktiviert und / oder die erste Funktion durch eine zweite Funktion ersetzt wird, in dem der Programmkode der ausgewählten ersten Funktion mittels des Programmkodes der zweiten Funktion überschrieben wird.

Es sei angemerkt, dass vorliegend unter dem Begriff Informationsstruktur sowohl eine Datei als auch eine Dateienstruktur als auch eine Datenstruktur innerhalb eines Arbeitsprogramms zu verstehen ist. Des Weiteren sei angemerkt, dass unter dem Begriff Subsystem ein Modell, vorzugsweise graphisch dargestellt, einer ausgewählten d.h. zu löschenden Funktion oder eines nicht belegten Bereichs des Speichers verstanden wird. Hierbei ist es vorteilhaft, jeder ausgewählten ersten Funktion und nicht belegten freien Speicherbereichen jeweils ein Subsystem zuzuordnen. Ferner sei angemerkt, dass unter dem Begriff "Bezeichner" unter anderem ein erster sogenannter vorläufiger Namen eines Unterprogramms verstanden wird. Es ist grundsätzlich vorgesehen, nach der Ermittlung des eigentlichen d.h. "richtigen" Funktionsnamen den ernsten vorläufigen Namen durch den "richtigen" Funktionsnamen zu ersetzen.

Ein Vorteil des Verfahrens zur Beeinflussung eines Steuerprogramms eines Steuergerätes ist es, dass auch bei älteren Steuergeräten, welche bereits zur Steuerung von Motoren verwendet werden sich Änderungen an den Steuerprogrammen sogenannte Updates durchführen lassen, ohne den Quellkode des Steuerprogramms oder eine Beschreibung des Steuerprogramms mit einer Auflistung der Unterprogrammen bzw. deren Namen und Sprungadressen zu kennen. Mit dem vorliegenden Verfahren wird der Anwender weitgehend unabhängig von mangelnden Informationen der Steuerprogrammhersteller. Auch in dem Bereich des Tunings von Motoren ermöglicht das Verfahren einen einfachen und kostengünstigen sehr weitgehenden Eingriff in das Steuerprogramm.

In einer Weiterbildung des Verfahrens werden mehrere erste zu löschende Funktionen ausgewählt und von mehreren zweiten Funktionen ersetzt. Hierzu wird in der Anzeigeeinheit die mittels eines Bezeichners benannten Funktionen mit deren Größe und Adressen graphisch dargestellt. Anschließend werden die zu ändernden oder zu löschenden Funktionen ausgewählt und mittels zweiten Funktionen ersetzt. Des Weiteren ist es bevorzugt, dass der Speicher außer den mit Unterprogrammen belegten Speicherbereichen auch freie Speicherbereiche enthält. Untersuchungen haben gezeigt, dass es vorteilhaft ist, wenn den einzelnen von den als zu löschend ausgewählten ersten Funktionen belegten Speicherbereichen und auch den freien Speicherbereichen jeweils ein eindeutiger Segmentname zugeordnet und in der Informationsstruktur gespeichert wird. Vorzugsweise entspricht der Bezeichner dem Segmentnamen oder der Bezeichner und der Segmentnamen sind identisch. Hiernach ist in der Informationsstruktur zu jedem freien Speicherbereich der Bezeichner, die Sprungadresse des Unterprogrammaufrufs, die Länge, d.h. die Größe des Unterprogramms und der Segmentname hinterlegt. Ein Vorteil der Zuordnung der Segmentnamen ist es, dass bei einer Vielzahl von Speicherbereichen ein weiteres Ordnungskriterium zur Verfügung steht und sich eine Klassifizierung d.h. Ordnung nach Segmentnamen durchführen lässt.

In einer anderen Weiterbildung ist es vorteilhaft, dass aus einer Analyse der Adressen und Größen der Speicherbereiche der zu löschenden ersten Funktionen einzelne zusammenhängende Speicherbereiche und die Größe und die Adressen der einzelnen Speicherbereiche ermittelt und in der Informationsstruktur abgelegt werden.

In einer anderen Ausführungsform wird mittels des Computersystems für jeden Speicherbereich einer zu löschenden ersten Funktion und / oder für jeden freien Speicherbereich vor einer Erzeugung des Programmkodes der zweiten Funktion ein leeres Subsystem erzeugt und dem Speicherbereich zugeordnet und die Zuordnung des Subsystems zu dem Speicherbereich in der Informationsstruktur und/oder in dem Subsystem abgelegt. Besonders bevorzugt ist, dass auch die zweite Funktion einem leeren Subsystem zugeordnet wird. Des Weiteren wird gemäß einer Ausführungsform dem leeren Subsystem eine Metainformation zugeordnet und die Metainformation in der Informationsstruktur und/oder dem Subsystem abgelegt.

In einer anderen Weiterbildung werden mehrere Subsysteme mittels Programmaufrufen miteinander verbunden und die Verknüpfungen mit denen Subsysteme verbunden werden in der Informationsstruktur und/oder den Subsystemen abgelegt. Untersuchungen haben gezeigt, dass es vorteilhaft ist für jedes Subsystem einen separaten Programmkode vorzugsweise in Form eines C-Files zu erzeugen. Es versteht sich, dass auch andere Programmiersprachen sich verwenden lassen.

In einer bevorzugten Ausführungsform wird für die zweite Funktion mittels eines Kompilers binärer Programmkode erzeugt und sofern eine Metainformation vorhanden ist, wird die Metainformation in den binären Programmkode eingepflegt.

Untersuchungen haben gezeigt, dass es vorteilhaft ist, die den ersten Funktionen zugeordneten Speicherbereiche in dem Computersystem nur dann darzustellen, wenn die zugeordneten Speicherbereiche eine vorgegebene Mindestgröße überschreiten. In einer anderen Weiterbildung ist es vorteilhaft, wenn mittels eines Prüfprogramms untersucht wird, ob der Speicherbereich der ausgewählten einen einzigen oder mehreren ersten Funktion für die Größe der zweiten Funktion ausreicht.

In einer anderen Ausführungsform wird die Prüfung der Speicherbereiche mittels eines heuristischen Verfahrens durchgeführt und der Speicherbedarf der zweiten Funktion über die Anzahl und / oder Art der verwendeten Blöcke bestimmt. In einer besonders bevorzugten Ausführungsform werden bei der Erzeugung des binären Programmkodes der zweiten Funktion bei einer Aufteilung des binären Programmkodes der zweiten Funktion auf mehrere Speicherbereiche in den erzeugten Programmkode in Abhängigkeit der Aufteilung auf die mehreren Speicherbereich passende Sprungbefehle eingefügt. Hierbei wird unter der Bezeichnung passender Sprungbefehle insbesondere verstanden, dass an dem Adressende eines Speicherbereichs ein Sprungbefehl aufgerufen wird der auf den Adressanfang eines weiteren Speicherbereichs zeigt. Es versteht sich, dass unter der Erzeugung des Programmkodes ein Kompilierungsschritt verstanden wird, bei dem aus einer Programmiersprache insbesondere C-Programmschritte ein binärer Programmkode erzeugt wird. Insbesondere ist es bevorzugt, den binären Programmkode der zweiten Funktion in den oder die zugeordneten Speicherbereiche einzuschreiben.

In einer bevorzugten Weiterbildung wird in dem Computersystem nach der Zuordnung einer zweiten Funktion der verbleibende Speicherbereich angezeigt. Ein Vorteil ist, dass bei einer Vielzahl von zweiten Funktionen sich sukzessive überprüfen lässt, ob für eine weitere zweite Funktion ausreichend Speicherplatz zur Verfügung steht.

In einer anderen Weiterbildung wird in dem Speicher an dem Zielort der Sprungadresse der ausgewählten ersten Funktion ein Rücksprungbefehl abgelegt. Es versteht sich, dass die Adresse bei der der Rücksprungbefehl eingeschrieben wird für den Programmkode der zweiten Funktion ausgeblendet und nicht mit Programmkode der zweiten Funktion beschrieben wird. Falls ein Funktionsaufruf einer der ersten ausgewählten Funktionen nicht gefunden und nicht desaktiviert und folglich noch die erste Funktion aufgerufen wird, wird bei der Abarbeitung des Programmkodes einfach zurückgesprungen und das Programm weiter abgearbeitet. Bei einem Aufruf der zweiten Funktion, wird der Aufruf auf die auf den Rücksprungbefehl folgende Speicheradresse gesetzt oder anders ausgedrückt die zweite Funktion beginnt erst bei der auf den Rücksprungbefehl folgenden Speicheradresse. Hierdurch wird die Sicherheit bei der Änderung des Speicherinhalts erhöht.

Eine andere Ausführungsform ist, dass vor dem Speicherbereich der zu löschenden ersten Funktion sich bereits ein freier Speicherbereich befindet. Beide Bereiche werden zu einem großen Speicherbereich zusammengefasst und ein einziges Subsystem hierfür erzeugt und einer der zweiten Funktionen zugeordnet. Um nun sicherzustellen, dass ein Aufruf der ersten Funktion nicht mitten in die zweite Funktion springt, wird an den ursprünglichen Adressort der Sprungadresse der ersten Funktion der Rücksprungbefehl gesetzt. Der Programmkode der zweiten Funktion belegt den übrigen Bereich des Speicherbereichs, jedoch nicht die Adresse des Rücksprungbefehls. Es versteht sich, dass alle Aufrufe für die zweite Funktion auf die Startadresse der zweiten Funktion zeigen.

Die Erfindung wird nachfolgend unter Bezugnahme auf die Zeichnungen näher erläutert. Hierbei werden gleichartige Teile mit identischen Bezeichnungen beschriftet. Die dargestellte Ausführungsformen sind stark schematisiert, d.h. die Abstände und laterale und vertikale Erstreckung sind nicht maßstäblich und weisen, sofern nicht anders angegeben auch keine ableitbare geometrische Relation zueinander auf. Darin zeigen die:
- Figur 1: ein vereinfachter Aufbau eines Steuergerätes in Verbindung mit einer Anzeigeeinheit,
- Figur 2: eine detailliertere Unterteilung des Speichers aus der Darstellung der Figur 1 vor und nach der Änderung des Speicherinhalts,
- Figur 3: eine vereinfachte Darstellung einer Ausführungsform des erfindungsgemäßen Verfahrens.

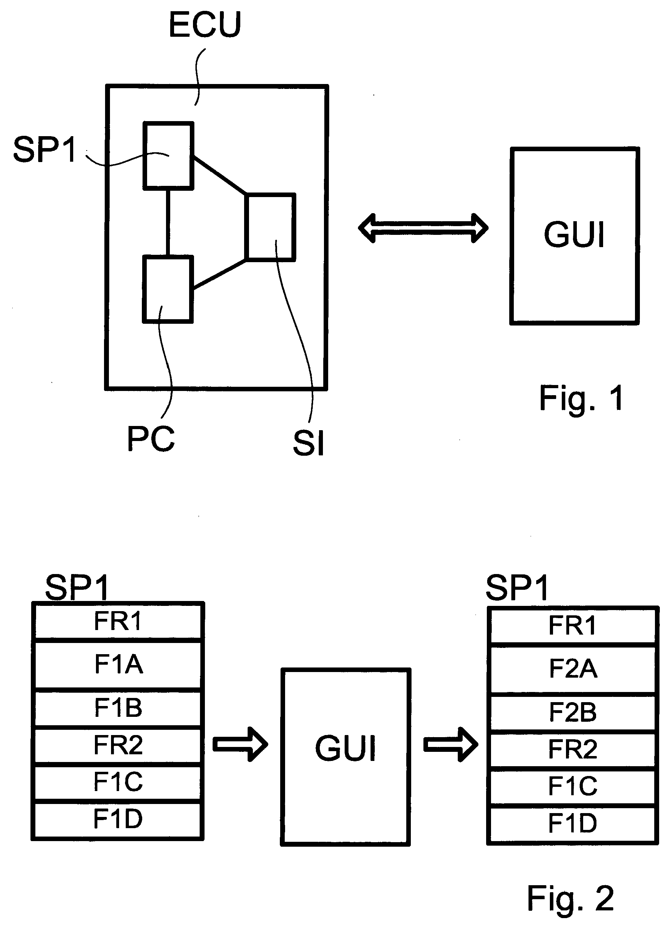

Die Abbildung der Figur 1 zeigt ein Steuergerät ECU aufweisend einen Speicher SP1 und eine Schnittstelleneinheit SI und einen Prozessor PC. Das Steuergerät ECU steht mittels der Schnittstelleneinheit SI mit einem Computersystem GUI in einer Datenverbindung. Das Computersystem GUI umfasst eine Anzeigeeinheit - nicht dargestellt. Im Allgemeinen wird die Anzeigeeinheit auch als graphische Schnittstelleneinheit bezeichnet. In der Steuereinheit ECU wird mittels des Prozessors PC ein Steuerprogramm abgearbeitet. Das Steuerprogramm liegt als binärer Programmkode vor und lässt sich auch als Hauptprogramm bezeichnen. Das Steuerprogramm umfasst eine Vielzahl von in der Abbildung der Figur 2 dargestellten ersten Funktionen F1 A, F1 B, F1 C, ...F1N. Eine bevorzugte Aufgabe wenigstens eines Teils der ersten Funktionen F1 A, F1 B, F1 C, ...F1N ist eine Steuerung von einem oder mehreren Aktuatoren, nicht dargestellt. Ferner sind den ersten Funktionen F1 A, F1 B, F1 C, ..F1 N Unterprogramme zugeordnet.

Das Steuerprogramm wird von dem Prozessor PC abgearbeitet, wobei in dem Programmkode des Steuerprogramms für den Aufruf von einer der ersten Funktionen (F1A, F1 B, F1 C, ..F1N) eine Sprungadresse vorliegt. Hierbei zeigt die Sprungadresse auf eine Speicheradresse des mit dem Funktionsaufruf verbundenen Unterprogramms. Das jeweilige Unterprogramm liegt wie das Steuerprogramm als eine Abfolge von einem binären Programmkode vor. An dem Ende der Abfolge des Programmkodes des Unterprogramms wird mittels eines Rücksprungbefehls an eine vorgegebene Stelle des Hauptprogramms zurückgesprungen und der Programmkode des Steuerprogramms weiter abgearbeitet.

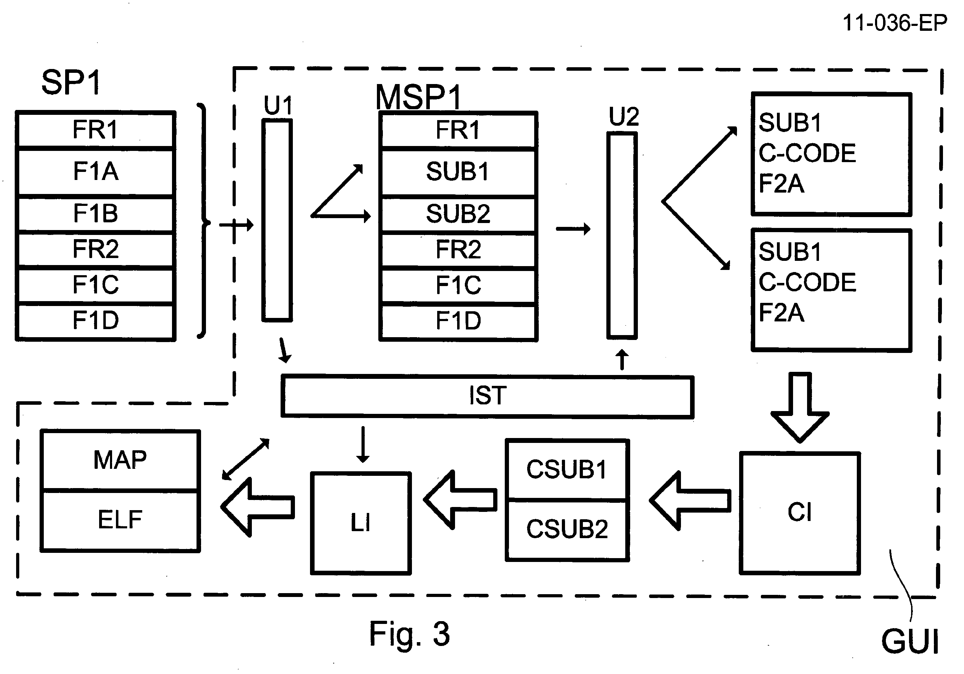

Mittels des Computersystems GUI wird der Programmkode des Steuerprogramms auf das Auftreten von Funktionsaufrufen untersucht und die mit den Funktionsaufrufen verbundenen Sprungadressen und Adressen der Rücksprungbefehle ermittelt und aus der Ermittlung die Größe der mit den jeweiligen Unterprogrammen belegten Speicherbereiche des Speichers SP1 abgeleitet. Des Weiteren werden die ermittelten Unterprogramme mit einem Bezeichner versehen. Hierbei umfasst der Begriff "Bezeichner" die den Unterprogrammen zugeordneten Namen. Die ermittelten Daten, d.h. die Größe und Adresse der ermittelten ersten Funktion F1 A, F1 B, F1 C, ..F1 N und der jeweilige Bezeichner werden in einer Informationsstruktur IST, dargestellt in der Abbildung der Figur 3, gespeichert. Des Weiteren werden die den ersten Funktionen F1 A, F1 B, F1 C, ..F1N zugeordneten Bezeichner mit den, den jeweiligen ersten Funktionen F1 A, F1 B, F1 C, ..F1 N zugeordneten Größen und Adressen der Speicherbereiche in der Anzeigeeinheit dargestellt.

Die Abbildung der Figur 2 zeigt für den in der Abbildung der Figur 1 dargestellten Speicher SP1 eine schematisierte Belegung des Speicherplatzes. Im Folgenden werden nur die Unterschiede zu der Darstellung in der Figur 1 erläutert. In dem Speicher SP1 sind eine Vielzahl von ersten Funktionen F1A, F1 B, F1 C, ..F1 N abgelegt. Zwischen einem Teil der ersten Funktionen F1 A, F1 B, F1 C, ..F1N sind freie Speicherbereiche FR1 und FR2 ausgebildet. Mittels des Computersystems GUI wird aus der Vielzahl der ermittelten ersten Funktionen F1 A, F1B, F1 C, ..F1 N die erste erste Funktion F1A und die zweite erste Funktion F1B als zu löschend ausgewählt. Letztlich wird der Programmkode der ausgewählten ersten Funktionen F1A und F1B mittels des Programmkodes der ersten zweiten Funktion F2A und mittels der zweiten zweiten Funktion F2B überschrieben.

Mittels der Anzeigeeinheit wird nach der Untersuchung des Programmkodes die erste zweite Funktion F2A und die zweite zweite Funktion F2B an der Stelle der bisherigen ersten Funktionen F1A und F1 B abgelegt, anders ausgedrückt die ausgewählten ersten Funktionen F1A und F1 B werden ersetzt.

In der Abbildung der Figur 3 ist ein Teil des Aufbaus des Computersystems GUI vereinfacht dargestellt. Im Folgenden werden nur die Unterschiede zu den Darstellungen der vorangegangen Figuren erläutert. Bei der Analyse d.h. bei der Untersuchung des Programmkodes des Steuerprogramms während eines ersten Schritts U1 werden die ermittelten Daten für die zu löschen ersten Funktionen F1A und F1 B in der Informationsstruktur IST gespeichert. Zusätzlich zu den ermittelten Daten wird den Speicherbereichen der zu löschenden ersten Funktionen F1A und F1 B ein Segmentnamen zugeordnet und in der Informationsstruktur IST gespeichert. Hiernach ist in der I nformationsstruktur IST zu den beiden ersten Funktionen F1 A und F1 B zugeordneten und nunmehr als frei eingestuften Speicherplätze der Bezeichner, die Start-Adresse des freien Speicherplatzes, die Länge, d.h. die Größe des Speicherbereichs und der Segmentname hinterlegt.

Anschließend wird dem der ersten ersten Funktion F1A verknüpften freien Speicherplatz ein erstes Subsystem SUB1 und dem der zweiten ersten Funktion F1 B verknüpften freien Speicherplatz ein zweites Subsystem SUB2 zugeordnet. Die geänderte Aufteilung der Speicherbereiche des Speicher SP1 wird als Modell MSP1 des Speichers SP1 in einer Anzeigeeinheit dargestellt. Die freien Speicherbereich FR1 und FR2 werden ebenfalls in der Anzeigeeinheit dargestellt. Vorliegend sind die beiden freien Speicherbereiche FR1 und FR2 nicht mit Subsystemen verknüpft. In einer alternativen nicht dargestellten Ausführungsform lassen sich die freien Speicherbereiche FR1 und FR2 ebenfalls mit Subsystemen verknüpfen und darstellen, sofern die Größe der freien Speicherbereiche FR1 und FR2 eine vorgegebene Mindestgröße überschreiten.

In einem zweiten Schritt U2 wird unter Verwendung der Daten aus der Informationsstruktur IST für das erste Subsystem SUB1 der C-Kode der ersten zweiten Funktion F2A und für das zweite Subsystem SUB2 der C-Kode der zweiten zweiten Funktion F2B generiert und dem jeweiligen Subsystem SUB1 und SUB2 zugeordnet. Bei der Generierung des C-Kodes werden die erste zweiten Funktion F2A und die zweite zweite Funktion F2B mittels einer Erzeugung von Kompiler spezifischen C-Kode Anweisungen jeweils einem Segmentnamen zugeordnet. In einem nachfolgenden Kompilierungsschritt wird mittels eines Kompilers CI der binäre Programmkode als eine erste Objektdatei CSUB1 und eine zweite Objektdatei CSUB2 erzeugt. Die resultierenden beiden Objektdateien CSUB1 und CSUB2 enthalten neben dem binären Programmkode auch sogenannten Metaadressinformationen. Es versteht sich, dass der Programmkode der ersten Objektdatei CSUB1 der ersten zweiten Funktion F2A und der Programmkode der zweiten Objektdatei CSUB2 der zweiten zweiten Funktion F2B entspricht.

Untersuchungen haben gezeigt, dass es vorteilhaft ist, die beiden Objektdateien CSUB1 und CSUB2 hinsichtlich der Größe des jeweils benötigten Speicherplatzes zu untersuchen und jeweils mit der Größe des zur Verfügung stehenden Speicherbereichs zu vergleichen. Ergibt sich bei dem Vergleich, dass die Größe des zugeordneten Speicherbereichs nicht ausreicht, lässt sich weiterer Speicherbereich durch das Löschen von weiteren ersten Funktionen F1 C und F1 D erzeugen und oder es werden bereits die nicht mit ersten Funktionen F1 A, F1 B, F1 C und F1 D belegten Speicherbereiche FR1 und FR2 verwendet.

Sofern eine Aufteilung von einer der zweiten Funktionen F2A und F2B auf mehrere Subsysteme oder mehrere Speicherbereiche erfolgt, werden hierzu entsprechende Sprunganweisen bei der Generierung des C-Kodes eingeführt.

Es sei angemerkt, dass aneinander angrenzende freie Speicherbereiche und Speicherbereiche der zuvor gelöschten ersten Funktionen sich zu einem größeren freien Speicherbereich zusammenlegen lassen. In einem nachfolgenden Schritt wird mittels eines Linkers LI der erzeugte binäre Programmkode der Objektdateien CSUB1 und CSUB2 den freien Speicherbereichen, hier vorliegend also den Speicherbereichen der zuvor gelöschten ersten Funktionen oder den zusammengelegten freien Speicherbereichen, zugewiesen. Dem Linker LI werden die für die Zuordnung notwendigen Informationen aus der Informationsstruktur IST zu Verfügung gestellt. Vorzugsweise wird aus den Informationen der Informationsstruktur IST ein für den Linker LI lesbares sogenanntes Linker-Command-File erzeugt. Der Linker LI erzeugt nachfolgend eine Binärdatei ELF, vorzugsweise im "elf"-Datei Format. Die Binärdatei ELF im "elf"-Format enthält den Programmkode der Objektdatei CSUB1 und CSUB2 verteilt auf die freien Speicherbereiche, das sind die Speicherbereiche der zuvor gelöschten ersten Funktionen oder die zusammengelegten freien Speicherbereiche. Ferner erzeugt der Linker LI eine sogenannte "map"-Datei MAP mit Informationen über den Ort und Größe der einzelnen Segmente.

In einem weiteren Schritt wird mittels eines Abgleichs des Inhalts der "map"-Datei MAP mit dem Inhalt der Informationsstruktur IST eine Ermittlung des nicht benötigten Speicherbereichs des jeweiligen Subsystems SUB1 und SUB2 durchgeführt und in der Anzeigeeinheit dargestellt.

Es versteht sich, dass sich die einzelnen Schritte des Verfahrens auch mehrfach durchlaufen lassen. Insbesondere lassen sich nach der ersten Auswahl von den zu löschenden ersten Funktionen weitere zu löschende erste Funktionen auswählen. Auch lässt sich eine Prüfung der Größe mittels des Computersystems GUI jederzeit durchführen. Des Weiteren ist es vorteilhaft, dass das Ergebnis der letzten Kodeerzeugung kombiniert mit den geänderten Blöcken für eine verbesserte Abschätzung der Größe des Speicherplatzbedarfs genutzt wird.

## Patentansprüche

1. Verfahren zur Beeinflussung eines Steuerprogramms eines Steuergerätes, wobei das Steuerprogramm eine Vielzahl von ersten Funktionen (F1A, F1 B, F1 C, ..F1N) und wenigstens eine der ersten Funktionen (F1A, F1B, F1C, ...F1N) für die Steuerung eines Aktuators ausgebildet ist, und ein Speicher (SP1) vorgesehen ist und der Speicher (SP1) mit den ersten Funktionen (F1 A, F1 B, F1 C, ..F1 N) zugeordneten Unterprogrammen belegte Speicherbereiche aufweist, und
das Steuerprogramm als ein binärer Programmkode vorliegt, wobei in dem Programmkode des Steuerprogramms bei dem Aufruf von einer der ersten Funktionen (F1 A, F1 B, F1 C, ..F1 N) eine Sprungadresse vorliegt und die Sprungadresse auf eine Speicheradresse des mit dem Funktionsaufruf verbundenen Unterprogramms zeigt und das Unterprogramm als eine Abfolge von binärem Programmkode vorliegt und an dem Ende der Abfolge des Programmkodes des Unterprogramms ein Rücksprungbefehl vorliegt,
**dadurch gekennzeichnet, dass**
der Programmkode des Steuerprogramms auf das Auftreten von Funktionsaufrufen untersucht wird und die mit den Funktionsaufrufen verbundenen Sprungadressen und Adressen der Rücksprungbefehle ermittelt werden und aus der Ermittlung die Größe die mit den jeweiligen Unterprogrammen belegten Speicherbereiche des Speichers (SP1) ermittelt werden und die den ersten Funktionen (F1 A, F1 B, F1 C, ..F1 N) zugeordneten Bezeichner mit den, den jeweiligen ersten Funktionen (F1 A, F1 B, F1 C, ..F1N) zugeordneten Größen und Adressen der Speicherbereiche in einer Anzeigeeinheit dargestellt werden, wobei die Anzeigeeinheit als Teil eines Computersystems (GUI) ausgebildet ist und mittels des Computersystems (GUI) wenigstens eine der ersten Funktionen (F1 A, F1 B, F1 C, ..F1 N) als zu löschend ausgewählt wird und Größe und Adresse der ausgewählten ersten Funktion (F1 A, F1 B, F1 C, ...F1N) in einer Informationsstruktur (IST) gespeichert wird und wenigstens ein Funktionsaufruf der ausgewählten ersten Funktion (F1A, F1 B, F1 C, ..F1 N) deaktiviert und / oder die erste Funktion (F1A, F1 B, F1C, ...F1N) durch eine zweite Funktion (F2A) ersetzt wird, in dem der Programmkode der ausgewählten ersten Funktion (F1A, F1B, F1C, ..F1N) mittels des Programmkodes der zweiten Funktion (F2A) überschrieben wird.

2. Verfahren nach Anspruch 1, **dadurch gekennzeichnet, dass** mehrere erste zu löschende Funktionen (F1A, F1B, F1C, ...F1N) ausgewählt und von mehreren zweiten Funktionen (F2A, F2B) ersetzt werden.

3. Verfahren nach Anspruch 1, **dadurch gekennzeichnet, dass** der Speicher (SP1) freie Speicherbereiche (FR1, FR2) enthält.

4. Verfahren nach einem der Ansprüche 1 bis 3, **dadurch gekennzeichnet, dass** den belegten Speicherbereichen, der als zu löschend ausgewählten ersten Funktionen (F1 A, F1B), und den freien Speicherbereichen (FR1 FR2) jeweils ein eindeutiger Segmentname zugeordnet wird.

5. Verfahren nach einem der Ansprüche 1 bis 4, **dadurch gekennzeichnet, dass** aus einer Analyse der Adressen und Größen der Speicherbereiche der zu löschenden ersten Funktionen (F1A, F1B) einzelne zusammenhängende Speicherbereiche und die Größe und die Adressen der einzelnen Speicherbereiche ermittelt und in der Informationsstruktur (IST) abgelegt werden.

6. Verfahren nach Anspruch 4 oder Anspruch 5, **dadurch gekennzeichnet, dass** in der Informationsstruktur (IST) die Segmentnamen abgelegt werden.

7. Verfahren nach einem der Ansprüche 1 bis 5, **dadurch gekennzeichnet, dass** mittels des Computersystems (GUI) für jeden Speicherbereich einer zu löschenden ersten Funktion (F1A, F1B) und / oder für jeden freien Speicherbereich vor einer Erzeugung des Programmkodes der zweiten Funktion (F2A, F2B) ein leeres Subsystem (SUB1, SUB2) erzeugt und dem Speicherbereich zugeordnet wird und die Zuordnung des Subsystems (SUB1, SUB2) zu dem Speicherbereiche in der Informationsstruktur (IST) und/oder in dem Subsystem (SUB1, SUB2) abgelegt werden.

8. Verfahren nach Anspruch 7, **dadurch gekennzeichnet, dass** die zweite Funktion (F2A, F2B) einem leeren Subsystem (SUB2) zugeordnet wird.

9. Verfahren nach Anspruch 7 oder Anspruch 8, **dadurch gekennzeichnet, dass** dem leeren Subsystem (SUB1, SUB2) eine Metainformation zugeordnet wird und die Metainformation in der Informationsstruktur (IST) und/oder dem Subsystem (SUB1, SUB2) abgelegt wird.

10. Verfahren nach einem der Ansprüche 7 bis 9, **dadurch gekennzeichnet, dass** mehrere Subsysteme (SUB1, SUB2) mittels Programmaufrufen miteinander verbunden werden und die Verknüpfungen in der Informationsstruktur (IST) und/oder den Subsystemen (SUB1, SUB2) abgelegt werden.

11. Verfahren nach einem der Ansprüche 7 bis 10, **dadurch gekennzeichnet, dass** für jedes Subsystem (SUB1, SUB2) ein separater Programmkode in Form eines C-Files erzeugt wird.

12. Verfahren nach einem der Ansprüche 1 bis 11, **dadurch gekennzeichnet, dass** für die zweite Funktion (F2A, F2B) mittels eines Kompilers (CI) binärer Programmkode erzeugt wird und sofern eine Metainformation vorhanden ist die Metainformation in den binären Programmkode eingepflegt wird.

13. Verfahren nach einem der vorangegangenen Ansprüche, **dadurch gekennzeichnet, dass** die den ersten Funktionen (F1 A, F1 B, F1 C, ..F1 N) zugeordneten Speicherbereiche in dem Computersystem (GUI) dargestellt werden, sofern die zugeordneten Speicherbereiche eine vorgegebene Mindestgröße überschreiten.

14. Verfahren nach einem der vorangegangen Ansprüche, **dadurch gekennzeichnet, dass** mittels eines Prüfprogramms untersucht wird, ob der Speicherbereich der ausgewählten ersten Funktion (F1A, F1B) für die Größe der zweiten Funktion (F2A, F2B) ausreicht.

15. Verfahren nach einem der vorangegangen Ansprüche, **dadurch gekennzeichnet, dass** die Prüfung der Speicherbereiche mittels eines heuristischen Verfahrens durchgeführt wird und der Speicherbedarf der zweiten Funktion (F2A, F2B) über die Anzahl und / oder Art der verwendeten Blöcke bestimmt wird.

16. Verfahren nach einem der vorangegangenen Ansprüche, **dadurch gekennzeichnet, dass** bei der Erzeugung des binären Programmkodes der zweiten Funktion (F2A, F2B), bei der Aufteilung des binären Programmkodes der zweiten Funktion F2A, F2B) auf mehrere Speicherbereiche in den Programmkode in Abhängigkeit der Aufteilung passende Sprungbefehle eingefügt werden.

17. Verfahren nach einem der vorangegangenen Ansprüche, **dadurch gekennzeichnet, dass** in dem Computersystem nach der Zuordnung einer zweiten Funktion der verbleibende Speicherbereich angezeigt wird.

18. Verfahren nach einem der vorangegangenen Ansprüche, **dadurch gekennzeichnet, dass** der binäre Programmkode der zweiten Funktion in den zugeordneten Speicherbereich eingeschrieben wird.

19. Verfahren nach einem der vorangegangenen Ansprüche, **dadurch gekennzeichnet, dass** in dem Speicher (SP1) an dem Zielort der Sprungadresse der ausgewählten ersten Funktion (F1A, F1 B) ein Rücksprungbefehl abgelegt wird.

## Claims

1. A method for influencing a control program of a controller, the control program comprising a plurality of first functions (F1A, F1B, F1C, ...F1N) and at least one of the first functions (F1A, F1B, F1C, ..F1N) being implemented for controlling an actuator, and a memory (SP1) being provided and the memory (SP1) comprising memory areas occupied by subroutines associated with the first functions (F1A, F1, F1C, ..F1N), and the control program being a binary program code, a jump address being present in the program code of the control program when calling one of the first functions (F1A, F1B, F1C, ..F1N), and the jump address pointing to a memory address of the subroutine associated with the function call, and the subroutine being a sequence of binary program code and a return command being present at the end of the sequence of the program code of the subroutine,
**characterized in that**
the program code of the control program is checked for the occurrence of function calls and the jump addresses associated with the function calls and addresses of the return commands are determined and the size of the memory areas of the memory (SP1) occupied by each of the subroutines is determined from the determination and the identifiers associated with the first functions (F1A, F1B, F1C, ..F1N) and the sizes and addresses of the memory areas associated with the first functions (F1A, F1B, F1C, ..F1N) are shown in a display unit, wherein the display unit is implemented as part of a computer system (GUI) and at least one of the first functions (F1A, F1B, F1C, ..F1N) is selected for deletion by means of the computer system (GUI) and the size and address of the selected first function (F1A, F1 B, F1C, ..F1N) is saved in an information structure (1ST) and at least one function call of the selected first function (F1A, F1B, F1C, ..F1N) is deactivated and/or the first function (F1A, F1B, F1C, ..F1N) is replaced by a second function (F2A) **in that** the program code of the selected first function (F1A, F1B, F1C, ..F1N) is overwritten by the program code of the second function (F2A).

2. The method according to claim 1, **characterized in that** a plurality of first functions (F1A, F1 B, F1C, ..F1N) to be deleted are selected and are replaced by a plurality of second functions (F2A, F2B).

3. The method according to claim 1, **characterized in that** the memory (SP1) comprises free memory areas (FR1, FR2).

4. The method according to any one of the claims 1 through 3, **characterized in that** the occupied memory areas, the first functions (F1A, F1B) selected for deletion, and the free memory areas (FR1 FR2) are each associated with a unique segment name.

5. The method according to any one of the claims 1 through 4, **characterized in that** individual contiguous memory areas and the size and addresses of the individual memory areas are determined from an analysis of the addresses and sizes of the memory areas of the first functions (F1A, F1B) to be deleted and are stored in the information structure (IST).

6. The method according to claim 4 or claim 5, **characterized in that** the segment names are stored in the information structure (IST).

7. The method according to any one of the claims 1 through 5, **characterized in that** an empty subsystem (SUB1, SUB2) is generated by means of the computer system (GUI) and associated with the memory area for each memory area of a first function (F1A, F1B) to be deleted and/or for each free memory area prior to generating the program code of the second function (F2A, F2B), and the association of the subsystem (SUB1, SUB2) with the memory areas is stored in the information structure (1ST) and/or in the subsystem (SUB1, SUB2).

8. The method according to claim 7, **characterized in that** the second function (F2A, F2B) is associated with an empty subsystem (SUB2).

9. The method according to claim 7 or claim 8, **characterized in that** metainformation is associated with the empty subsystem (SUB1, SUB2) and the metainformation is stored in the information structure (1ST) and/or the subsystem (SUB1, SUB2).

10. The method according to any one of the claims 7 through 9, **characterized in that** a plurality of subsystems (SUB1, SUB2) are connected with each other by means of program calls and the links are stored in the information structure (1ST) and/or in the subsystems (SUB1, SUB2).

11. The method according to any one of the claims 7 through 10, **characterized in that** a separate program code is generated in the form of a C file for every subsystem (SUB1, SUB2).

12. The method according to any one of the claims 1 through 11, **characterized in that** binary program code is generated by means of a compiler (CI) for the second function (F2A, F2B) and if metainformation is present, the metainformation is incorporated into the binary program code.

13. The method according to any one of the preceding claims, **characterized in that** the memory areas associated with the first functions (F1A, F1 B, F1C, ..F1N) are shown in the computer system (GUI) if the associated memory areas exceed a prescribed minimum size.

14. The method according to any one of the preceding claims, **characterized in that** a test program is used to investigate whether the memory area of the selected first function (F1A, F1 B) is sufficient for the size of the second function (F2A, F2B).

15. The method according to any one of the preceding claims, **characterized in that** the test of the memory areas is performed by means of a heuristic method and the memory requirement of the second function (F2A, F2B) is determined from the number and/or type of blocks used.

16. The method according to any one of the preceding claims, **characterized in that** suitable jump commands are inserted in the program code depending on the distribution when generating the binary program code of the second function (F2A, F2B), when distributing the binary program code of the second function (F2A, F2B) across a plurality of memory areas.

17. The method according to any one of the preceding claims, **characterized in that** the remaining memory area is displayed in the computer system after associating a second function.

18. The method according to any one of the preceding claims, **characterized in that** the binary program code of the second function is written into the associated memory area.

19. The method according to any one of the preceding claims, **characterized in that** a return command is stored in the memory (SP1) at the destination location of the jump address of the selected first function (F1A, F1B).

## Revendications

1. Procédé pour influencer un programme de commande d'un appareil de commande, sachant que le programme de commande comprend une multitude de premières fonctions (F1A, F1B, F1C, ..F1N) et au moins l'une des premières fonctions (F1A, F1B, F1C, ..F1N) se présente sous une forme lui permettant de commander un actuateur, sachant qu'il est prévue une mémoire (SP1) et la mémoire (SP1) présente des zones de mémoires occupées par des sous-programmes attribués aux premières fonctions (F1A, F1B, F1C, ..F1N), et le programme de commande est disponible sous forme de code de programme binaire, sachant que, à l'appel de l'une des premières fonctions (F1A, F1B, F1C, ..F1N), une adresse de saut est disponible dans le code de programme du programme de commande et l'adresse de saut indique une adresse en mémoire du sous-programme lié à l'appel de la fonction et le sous-programme est disponible sous forme de séquence de code de programme binaire et une instruction de saut retour est disponible à la fin de la séquence du code de programme du sous-programme,
**caractérisé en ce que**
le code de programme du programme de commande est examiné eu égard à l'occurrence d'appels de fonctions et les adresses de saut liées aux appels de fonctions et les adresses de sauts retour sont déterminées et, sur la base de la détermination, la taille des zones de mémoire de la mémoire (SP1) occupées par les sous-programmes respectifs est calculée et les identificateurs attribués aux premières fonctions (F1A, F1B, F1C, ..F1N) sont affichés sur une unité d'affichage avec les tailles et les adresses de zones de mémoire attribuées aux premières fonctions (F1A, F1B, F1C, ..F1N) respectives, sachant que l'unité d'affichage se présente sous la forme d'un système d'ordinateur (GUI) et qu'à l'aide du système d'ordinateur (GUI), au moins l'une des premières fonctions (F1A, F1B, F1C, ..F1N) est sélectionnée en tant que fonction devant être supprimée et la taille et l'adresse de la première fonction (F1A, F1B, F1C, ..F1N) sélectionnée sont enregistrées dans une structure d'informations (IST) et au moins un appel de fonction de la première fonction (F1A, F1B, F1C, ..F1N) sélectionnée est désactivé et/ou la première fonction (F1A, F1B, F1C, ..F1N) est remplacée par une seconde fonction (F2A) en ce sens que le code de programme de la première fonction (F1A, F1B, F1C, ..F1N) sélectionnée est écrasé par le code de programme de la seconde fonction (F2A).

2. Procédé selon la revendication 1, **caractérisé en ce que** plusieurs premières fonctions (F1A, F1B, F1C, ..F1N) à supprimer sont sélectionnées et remplacées par plusieurs secondes fonctions (F2A, F2B).

3. Procédé selon la revendication 1, **caractérisé en ce que** la mémoire (SP1) comporte des zones de mémoire libres (FR1, FR2).

4. Procédé selon l'une des revendications 1 à 3, **caractérisé en ce qu'**un nom de segment univoque est respectivement attribué aux zones de mémoire occupées, aux premières fonctions (F1A, F1B) sélectionnées en tant que devant être supprimées et aux zones de mémoire libres (FR1, FR2).

5. Procédé selon l'une des revendications 1 à 4, **caractérisé en ce que** sur la base de l'analyse des adresses et des tailles des zones de mémoire des premières fonctions (F1A, F1B) devant être effacées, des zones de mémoire connexes individuelles et la taille et les adresses des différentes zones de mémoire sont déterminées et stockées dans la structure d'informations (IST).

6. Procédé selon la revendication 4 ou la revendication 5, **caractérisé en ce que** les noms des segments sont stockés dans la structure d'informations (IST).

7. Procédé selon l'une des revendications 1 à 5, **caractérisé en ce qu'**à l'aide du système d'ordinateur (GUI) pour chaque zone de mémoire d'une première fonction (F1A, F1B) devant être supprimée et/ou pour chaque zone de mémoire libre avant une génération du code de programme de la seconde fonction (F2A, F2B), un sous-système vide (SUB1, SUB2) est généré et attribué à la zone de mémoire et l'attribution du sous-système (SUB1, SUB2) à la zone de mémoire est stockée dans la structure d'informations et/ou dans le sous-système e (SUB1, SUB2).

8. Procédé selon la revendication 7, **caractérisé en ce que** la seconde fonction (F2A, F2B) est attribuée à un sous-système vide (SUB2).

9. Procédé selon la revendication 7 ou la revendication 8, **caractérisé en ce que** des méta-informations sont attribuées au sous-système vide (SUB1, SUB2) et les méta-informations sont stockées dans la structure d'informations (IST) et/ou le sous-système (SUB1, SUB2).

10. Procédé selon l'une des revendications 7 à 9, **caractérisé en ce que** plusieurs sous-systèmes (SUB1, SUB2) sont reliés les uns avec les autres via des appels de programmes et les liaisons sont stockées dans la structure d'informations (IST) et/ou les sous-systèmes (SUB1, SUB2).

11. Procédé selon l'une des revendications 7 bis 10, **caractérisé en ce que** pour chaque sous-système (SUB1, SUB2), un code de programme séparé sous forme de fichier en C est généré.

12. Procédé selon l'une des revendications 1 à 11, **caractérisé en ce que** pour la seconde fonction (F2A, F2B), un code de programme binaire est généré à l'aide d'un compilateur (Cl) et, dans la mesure où il existe des méta-informations, les méta-informations sont intégrées dans le code de programme binaire.

13. Procédé selon l'une des revendications précédentes, **caractérisé en ce que** les zones de mémoire attribuées aux premières fonctions (F1A, F1B, F1C, ..F1N) sont représentées dans le système d'ordinateur (GUI) dans la mesure où les zones de mémoire attribuées dépassent une taille minimale prescrite.

14. Procédé selon l'une des revendications précédentes, **caractérisé en ce qu'**un programme d'essai contrôle si la zone de mémoire de la première fonction (F1A, F1B) sélectionnée est d'une grandeur suffisante pour la taille de la seconde fonction (F2A, F2B).

15. Procédé selon l'une des revendications précédentes, **caractérisé en ce que** le contrôle des zones de mémoire est effectué à l'aide d'un procédé heuristique et le besoin en espace de stockage de la seconde fonction (F2A, F2B) est déterminé par le nombre et/ou le type de blocs utilisés.

16. Procédé selon l'une des revendications précédentes, **caractérisé en ce que**, lors de la génération du code de programme binaire de la seconde fonction (F2A, F2B), lors de la répartition du code de programme binaire de la seconde fonction (F2A, F2B) sur plusieurs zones de mémoire, des instructions de sauts adaptées à la répartition sont intégrées dans le code de programme.

17. Procédé selon l'une des revendications précédentes, **caractérisé en ce que** la zone de mémoire résiduelle est affichée sur le système d'ordinateur après l'attribution d'une seconde fonction.

18. Procédé selon l'une des revendications précédentes, **caractérisé en ce que** le code de programme binaire de la seconde fonction est écrit dans la zone de mémoire attribuée.

19. Procédé selon l'une des revendications précédentes, **caractérisé en ce qu'**une instruction de saut retour est stockée dans la mémoire (SP1), à la destination de l'adresse de saut de la première fonction sélectionnée (F1A, F1B).
